# EUROPEAN PATENT SPECIFICATION

(11) **EP 4 583 473 B1**
(45) Date of publication and mention of the grant of the patent: **15.07.2026**
(21) Application number: 23934312.2
(22) Date of filing: 24.11.2023
(51) Int. Cl.: H04L 27/14

(54) **METHOD AND APPARATUS FOR ADJUSTING WIDTH OF SYMBOL SUBJECTED TO FSK DEMODULATION**
VERFAHREN UND VORRICHTUNG ZUR EINSTELLUNG DER FSK-DEMODULIERTEN SYMBOLBREITE
PROCÉDÉ ET APPAREIL POUR RÉGLER LA LARGEUR D'UN SYMBOLE SOUMIS À UNE DÉMODULATION FSK

(30) Priority: 14.11.2023 CN 202311510132
(43) Date of publication of application: 09.07.2025
(73) Proprietor: CRSC RESEARCH & DESIGN INSTITUTE GROUP CO., LTD., Fengtai District Beijing 100070 (CN)
(72) Inventor: JIN, Xu, Beijing 100070 (CN); MA, Pan, Beijing 100070 (CN); WU, Fangda, Beijing 100070 (CN); LIN, Ziming, Beijing 100070 (CN)
(74) Representative: Haseltine Lake Kempner LLP
(86) International application number: PCT/CN2023/133811
(87) International publication number: WO 2025/102418

(56) References cited:
- WO-A1-2023/125529
- CN-A- 102 325 109
- CN-A- 105 978 638
- CN-A- 116 961 867
- CN-A- 116 961 867
- US-A- 4 881 041
- US-A1- 2023 318 657

## Description

### TECHNICAL FIELD

The present invention relates to the technical field of train communications, and more particularly, to a method and apparatus for adjusting FSK-demodulated symbol width.

### BACKGROUND

BTM is an important component of a transponder system. When a train passes through a transponder, a BTM antenna supplies energy to the transponder, and then the transponder modulates the information into FSK signals and transmits to the train, the BTM demodulates the received FSK signals and decodes it to obtain the information, and then transmits it to an onboard master control unit.

The receiving unit within a conventional BTM is responsible for demodulating the FSK signals transmitted by the transponder to obtain a cyclic bit stream having a cycle of 1023 bits. The width of the FSK symbol signal may be jittered due to various interferences in the propagation process, and a part of signals with only one bit width will be narrowed after being interfered with, which will cause itself and the signals before and after it to flip erroneously, redundancy or loss when generating the clock.

There are no solutions for processing such signals in the prior art.

CN 116 961 867 A (BEIJING NAT RAILWAY RES & DESIGN INST SIGNAL & COMMUNICATION LTD) 27 October 2023 (2023-10-27) considers jitter and duration correction for FSK demodulators.

### SUMMARY

In view of the above problems, the present invention provides a method and apparatus for adjusting FSK-demodulated symbol width which is applied in adjusting FSK-demodulated symbol width in a BTM receiving unit.

In the first aspect, the present invention provides a method for adjusting FSK-demodulated symbol width according to claim 1.

In a second aspect, the present invention provides an apparatus for adjusting FSK-demodulated symbol width according to claim 5.

In a third aspect, the present invention provides a computer program according to claim 6.

In a fourth aspect, the present invention provides a computer-readable storage medium according to claim 7.

The present invention has at least the following beneficial effects:

The present invention widens the narrow signal, reduces the probability of error when generating the clock, and solves the problem of signal error caused by width jitter of the FSK symbol signal in the prior art. The invention shapes the waveform with less than 1-bit width and bad shape into the ideal symbol shape, and the function embodied is mainly on how to subsequently use the symbol waveform.

Other features and advantages of the present invention will be set forth in the following specification, and will become apparent in part from the specification, or will be learned by practicing the present invention. The objects and other advantages of the present invention may be achieved and obtained by the structures indicated in the specification and in the accompanying drawings.

### BRIEF DESCRIPTION OF DRAWINGS

In order to more clearly illustrate the embodiments of the present invention or the technical solutions in the prior art, the following will simply describe the accompanying drawings to be used in the description of the embodiments or the prior art, and it is obvious that the accompanying drawings in the following description are some embodiments of the present invention, and other drawings can be obtained according to these drawings for those skilled in the art without creative work.
Fig. 1 is a flow diagram of an adjustment method according to an embodiment of the present invention;
Fig. 2 is a schematic diagram of an adjustment apparatus according to an embodiment of the present invention;
Fig. 3 is a structural schematic diagram of the electronic device according to an embodiment of the present invention;
Fig. 4 is a detailed schematic diagram of the adjustment method of the present invention;
Fig. 5 is a schematic diagram of the extension effect of the present invention.

### DETAILED DESCRIPTION

In order to make the objects, technical solutions and advantages of the embodiments of the present invention more clear, the technical solutions of the embodiments of the present invention will be clearly and completely described below with reference to the accompanying drawings of the embodiments of the present invention, and it is apparent that the described embodiments are some, but not all, embodiments of the present invention. Based on the embodiments in the present invention, all other embodiments obtained by those of ordinary skilled in the art without making inventive labor belong to the scope of protection of the present invention.

The BTM receiving unit, when performing FSK demodulation of the signal from the transponder, uses digital filtering techniques to recover the modulated signal into a bit stream to obtain a symbol signal. Since the FSK signal will be interfered in the propagation process, causing the symbol cycle to jitter, some single-bit symbols are affected and the cycle becomes smaller, which can easily result in the preceding and subsequent data being flipped erroneously, redundant or lost.

To this end, the present invention proposes a method and an apparatus for adjusting FSK-demodulated symbol width, including a method for adjusting FSK-demodulated symbol width, an apparatus for adjusting FSK-demodulated symbol width, an electronic device, and a computer-readable storage medium.

The present invention appropriately widens the single-bit symbols in the data stream to reduce the probability of errors occurring in the preceding and subsequent bits.

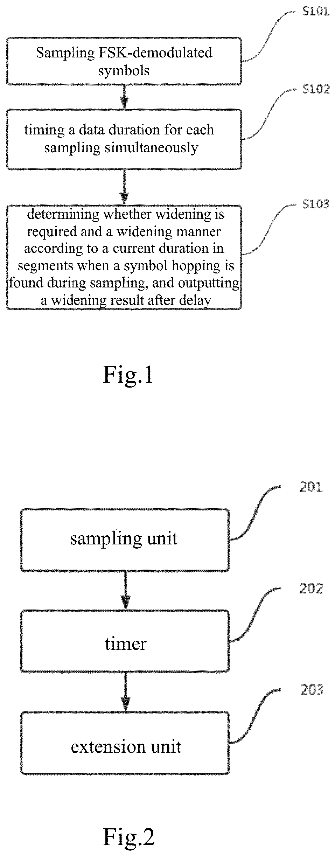

As shown in Fig. 1, a method for adjusting FSK-demodulated symbol width includes:
S101, sampling FSK-demodulated symbols;
S102, timing a data duration of each sampling simultaneously;
S103, determining in segments whether widening is required and a widening manner according to a current duration when a symbol hopping is found during sampling, and outputting a widening result after delay.

In particular, after sampling the FSK-demodulated symbols, the duration of the high/low level of the input signal is counted and a multi-level decision is proceeded when the symbol value flips and changes;
Performing a widening process on the symbol signal in the segments according to different cases of the multi-layer decision;
After the widening process, the input signal is delayed.

For example, the input is a stream of 0/1 bits, with 0 and 1 each lasting for a period of time respectively, and the counter value in the figure is the result of counting the duration of 0/1 using a local fixed frequency clock. The value of the current bit refers to whether the value corresponding to the duration of 0/1 currently being counted is 0 or 1, and the values of the two adjacent bits must be opposite. If the sampling sequence is 111100011, then the middle 0 lasts for 3 cycles, and a flip of this "value" means that all three values of 000 flip to 1, i.e., 111, and the overall output is 1111 111 11.

The method for widening is adopted because for a signal having a duration of 1-bit communication cycle, if the signal is narrow but more than 0.5-bit communication cycle, it will be decided as a significant bit, and the error of such a decision causes difficulty in the decision of the results of the preceding and subsequent bits, thus, according to the present decision method, since this bit is decided as 1 significant bit cycle, it is possible to reduce the influence on the preceding and subsequent bit decision by windening this cycle to close to one significant bit cycle.

The most ideal way to widening the range is to process similar analog signals. For example, ideally, if 1 communication symbol cycle is 160 clocks, so the duration is returned to 0 in case of a signal of 79 clocks (less than 1/2 of 160) being detected, i.e. the bit value mentioned in the previous article is flipped to an adjacent bit; if a signal of 86 clocks is detected, it is extended by 37 clocks forward and backward to 160 clocks; if a signal of 100 clocks is detected, it is extended by 30 clocks forward and backward to 160 clocks. However, it is difficult for hardware to implement the processing. The current method is that for signals within a certain range, such as signals with a timing cnt of 80~ 88 clocks, they are fixed and extended to 120-cnt clocks forward and backward respectively; for signals with a timing cnt of 96~104 clocks,they are fixed and extended to 136-cnt clocks forward and backward respectively. The hardware overhead of this method is smaller, but the difference is not big from the final realization effect.

**In** an embodiment, timing the data duration of each sampling simultaneously comprises:
counting the duration of the high level and/or the low level of the symbol signal.

**In** an embodiment, the symbol hopping comprises:
the symbol signal transiting from the high level to the low level or from the low level to the high level in a short time.

**In** an embodiment, outputting a widening result after delay comprises:
outputting the widening result after latency of T(n), T(n) being the number of symbol cycles that may be dynamically adjusted.

**In** one implementation, T represents the number of symbol cycle that may be dynamically adjusted with a default value of F/564480, and F is the system sampling clock frequency of the receiving unit. T(n) is the time for the overall delay of the signal, and is an extension level width corresponding to a maximum original level that needs to be extended, which is set according to the actual situation. TM(n) is a collision delay, which is set according to the actual situation with reference to T(n), and TM(n) is to resolve the collision encountered during the actual operation. For example, after operating on a sequence which is widened forward and backward, and when performing determination to the next sequence, it is found that this sequence also needs to be widened, and continuing to widen in the above manner may cause the current narrow sequence to be further narrowed by the backward widening of the previous sequence, causing the processing to become cluttered. Thus, the processing is slightly different from the conventional processing in order not to affect the current sequence, that is, this sequence is only widened by TM (x)-cnt, and at the same time, widening of the previous widen sequence to the current sequence is eliminated, with x corresponding to the cnt range of the current sequence. Wherein T(x) is T(1), T(2)... T(n-1), i.e., the n quantiles of T(0) to T(n), corresponding to B(1), B(2)... B(n-1), i.e., the n quantiles of B(0) to B(n), and TM(x) is TM(1), TM(2)... TM(n-1), i.e., the n quantiles of TM(0) to TM(n).

For example, a signal whose clocking cnt is 80~88 clocks, when there is no collision, will be extended forward and backward to 120-cnt clocks; if the previous counting sequence has been widened, the signal will only be extended backward to 150-cnt clocks, where TM(x) is 150, T(x) is 120, and B[x] is 80.

In one embodiment, determining in segments whether widening is required and the widening manner comprises:
determining whether a current level duration cnt exceeds the latency of T(n), and if so, continuing sampling to accumulate a next level duration, and proceeding to the determination of the next level.

In an embodiment, determining in segments whether widening is required and the widening manner, further comprises:
if a current level duration cnt does not exceed the latency of T(n), then determining sequentially whether the current level duration cnt exceeds B(n), B(n-1), B(n-2) ... B(0); if so, selecting a widening manner;
wherein B(n) is a maximum original level width line that requires to be widened; B(1), B(2), ... B(n-1) are n quantiles of B(0) to B(n). B(0) = T/2, T(0) = 3/4T, T(n)-B(n) = 1/4T, T(n) = 0.85T, all values have a margin of ± 10%.

In specific implementation, determining whether a current level duration cnt exceeds the latency of T(n), if so, continuing to accumulate a next level duration, and proceeding to the determination of the next level;
B(n) is the maximum original level width line that requires to be widened, which is divided into several interval segments, and B(1), B(2), ... B(n-1) are the n quantiles of B(0) to B(n);
if the current level duration cnt does not exceed the latency of T(n), then determine whether the current level duration cnt exceeds B(n), if so, perform the widening process to the symbol signal;
if the cnt does not exceed B(n), then continue to determine whether the cnt exceeds B(n-1), if so, perform the widening process to the symbol signal;
if the cnt does not exceed B(n-1), then continue to determine whether the cnt exceeds B(n-2), and so on until B(0);
determining whether the current level duration cnt exceeds B(0), and if so, perform the widening process to the symbol signal; if not, the current bit is flipped to the values of two adjacent bits. For example, the input is a stream of 0/1 bits, with 0 and 1 each lasting for a period of time, and the counter value in the figure is the result of counting the duration of 0/1 using a local fixed frequency clock. The value of the current bit refers to whether the value corresponding to the duration of 0/1 currently being counted is 0 or 1, and the values of the two adjacent bits must be opposite. If the sampling sequence is 111100011, then the middle 0 lasts for 3 cycles, and a flip of this "value" means that all three values of 000 flip to 1, i.e., 111, and the overall output is 1111 111 11.

In an embodiment, selecting the widening manner comprises:
clearing backward extension of a previous bit and backward extending a current bit by TM(n)-cnt if the previous bit has been widened if the previous bit has been widened, wherein TM(n) is a collision delay.

In specific implementation, the high level part is widened, and when the front and back are widened normally, the front and back will be widened to achieve the effect of T (x) row, but if the previous low level symbol has been widened, the high level part will only be widened backward, the widening length will be slightly increased, and the backward widening operation of the previous low level symbol element is canceled, and the backward widening operation of the previous low level symbol is cancelled, that is, the effect of the TM (x) row. TM (x) is TM (1), TM (2)... TM (n-1), that is, the n aliquots of TM (0) to TM (n). In practice, T (n) is calculated according to the experiment, then TM (n) is determined according to T (n), and then TM (x) is determined by aliquoting.

In an embodiment, selecting the widening manner comprises:
forward extending the current bit by T(n)-cnt and backward extending the current bit by T(n)-cnt if the previous bit is not widened.

In specific implementation, within each interval segment, T(n)-cnt is widened forward and backward, respectively, in which the forward widening directly flips the received future signal, and a marking signal is added backword to mark the widening time;
if the previous level has been widened backward, and the current level satisfies the widening condition, the current bit is changed to only widened backward only TM(x)-cnt, while clearing the previous signal that is widened backward.

Wherein, T(x) is T(1), T(2)... T(n-1), i.e., the n quantiles of T(0) to T(n), corresponding to B(1), B(2)... B(n-1), i.e., the n quantiles of B(0) to B(n), and TM(x) is TM(1), TM(2)... TM(n-1), i.e., the n quantiles of TM(0) to TM(n).

As shown in Fig. 2, an apparatus for adjusting FSK-demodulated symbol width includes: a sampling unit 201, a timer 202, and an extension unit 203;
the sampling unit 201 is used for sampling the FSK-demodulated symbols;
the timer 202 is used for timing the data duration of each sampling simultaneously;
the extension unit 203 is used for determining in segments whether widening is required and a widening manner according to a current duration when a symbol hopping is found during sampling, and outputting a widening result after delay.

In specific implementation, an implementation process of an apparatus for adjusting FSK-demodulated symbol width corresponds to a method for adjusting FSK-demodulated symbol width, which will not be described in detail herein.

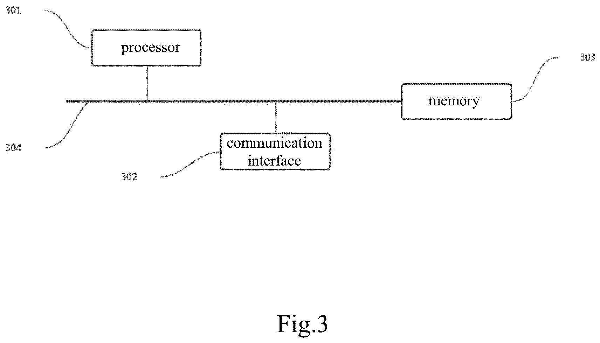

As shown in Fig. 3, the present invention provides an electronic device, comprising a processor 301, a communication interface 302, a memory 303, and a communication bus 304, wherein the processor 301, the communication interface 302, and the memory 303 communicate with each other via the communication bus;
the memory 303 stores a computer program;
the processor 301 is used for executing the computer program stored on the memory 303 to implement the method for adjusting FSK-demodulated symbol width described above.

A computer-readable storage medium having a computer program stored, when executed by the processor, implements the method for adjusting FSK-demodulated symbol width described above.

The computer-readable storage medium may be included in the device/apparatus described in the above embodiments; it may also exist separately without being assembled into the device/apparatus. The above-described computer-readable storage medium carries one or more programs, and when the one or more programs are executed, the method according to an embodiment of the present disclosure is implemented.

According to an embodiment of the present disclosure, the computer-readable storage medium may be a non-volatile computer-readable storage medium, for example, including, but not limited to: a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination thereof. In the present disclosure, a computer-readable storage medium may be any tangible medium containing or storing a program that may be used by or in conjunction with an instruction execution system, apparatus, or device.

In order to enable those skilled in the art to better understand the present invention, the principles of the present invention are described below with reference to the accompanying drawings:
The receiving unit within the BTM is responsible for demodulating the FSK signals transmitted by the transponder to obtain a cyclic bit stream having a cycle of 1023 bits. The width of the FSK symbol signal may be jittered due to various interferences in the propagation process, and a part of signals with only one bit width will be narrowed after being interfered with, which will cause itself and the signals before and after it to flip erroneously, redundancy or loss when generating the clock. There are no solutions for processing such signals in the prior art. If the one bit is widened by interference, its width exceeds the one bit width, which is not within the scope of the present method.

The first step of the present invention is to sample the input symbols, the second step is to time the data duration of each sampling (how long 0, 1 each last), the third step is to determine in segments whether widening is required and a widening manner according to a current duration when a symbol hopping is found during sampling, the fourth step is to output a target result after delay T(n).

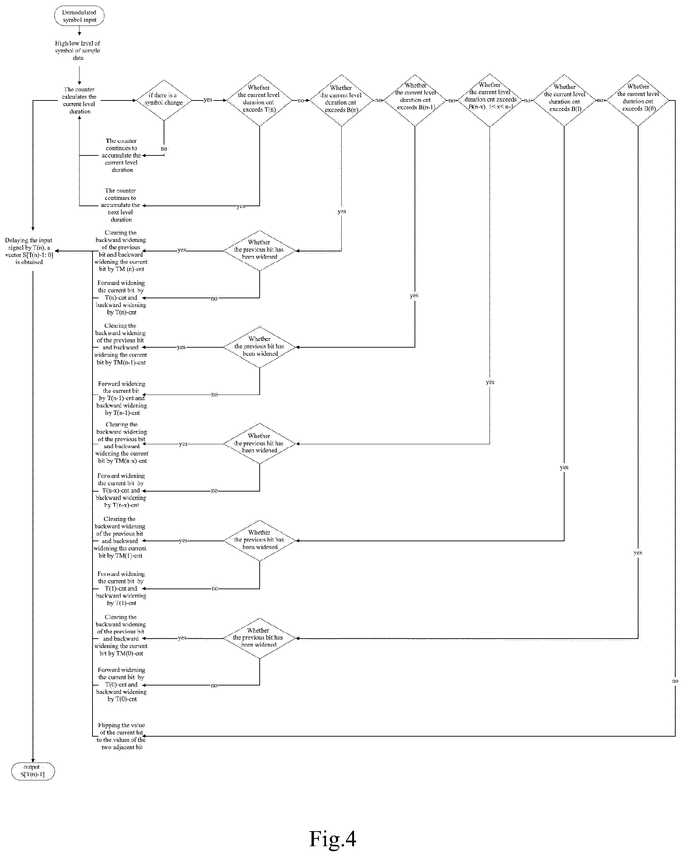

As shown in Fig. 4, T(n) represents the number of symbol cycle that may be dynamically adjustable with a default value of F/564480, and F is the system sampling clock frequency of the receiving unit.

The following conditions need to be met simultaneously: B(0) = T/2, T(0) = 3/4T, T(n)-B(n) = 1/4T, T(n) = 0.85T, TM(n) = 1.05T, all values have a margin of ± 10%.

B(n) is the maximum original level width line that requires to be widened, and the original level exceeding B(n) but not exceeding T(n) is widened according to a uniform standard. B(1), B(2) ... B(n-1) and T(1), T(2) ... T(n-1) are the n quantiles of B(0) to B(n) and T(0) to T(n).

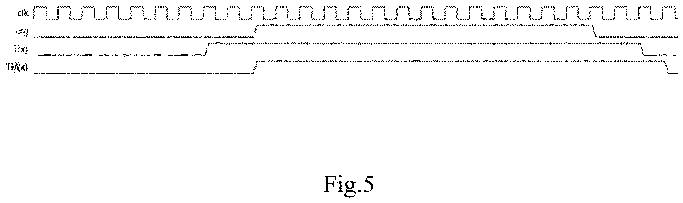

The schematic diagram of the extension effect is shown in Fig. 5. In order to facilitate understanding, the width parameters inside may not correspond to those in the text, but only show the trend. At the same time, it should be noted that in order to see the effect more clearly, the processed signal in this figure is not delayed, and it is pulled to the position aligned with the original signal. After the actual operation, the processed signal will have a certain delay relative to the original signal. In Fig. 5, the CLK signal is a clock signal, org is an original symbol, and the high-level part needs to be widened. When it is widened normally, it will be widened forward and backward, so as to achieve the effect of T (x) line. If the previous low-level symbol has been widened, this high-level part will only be widened backwards, and the widening length will be slightly increased, and the backward widening operation of the previous low-level symbol is canceled, that is, the effect of the TM (x) row.

After the demodulated input symbols are sampled, the local clock sampling is used to count the duration of the current high/low level (that is, the symbol value is 1/0), when the symbol value flips and changes (that is, from 1 to 0 or from 0 to 1, such as for 111111000, in the time 1 in the middle to 0), it enters the multi-layer determination on how to process the current level. Since the signal in transmission can only process the value that has been obtained in the past, and the actual demand is to output it in real-time, it is necessary to delay the output of the whole symbol, so that enough information has been obtained for the signal processing at the current output time, and the delay time is T (n).

Due to the limitation of hardware, the widening method of symbol signal is suitable for segmented processing according to different situations. Within each interval segment, T(x)-cnt is widened forward and backward, respectively, in which the forward widening directly flips the received future signal, and a marking signal is added backword to mark the widening time. If the previous level has been widened backward, and the current level satisfies the widening condition, the current bit is changed to only widened backward only TM(x)-cnt, while clearing the previous signal that is widened backward. The number of segments is weighed and adjusted according to the demand accuracy and resource situation, and the number of segments is recorded as n. For a system with a sampling frequency of about 100MHz, n is 4 ~ 5 is more suitable. The larger n, the more resources are consumed, but the better the accuracy. n is selected according to the system adaptation.

The method for widening is adopted because for a signal having a duration of 1-bit communication cycle, if the signal is narrow but more than 0.5-bit communication cycle, it will be decided as a significant bit, and the error of such a decision causes difficulty in the decision of the results of the preceding and subsequent bits, thus, according to the present decision method, since this bit is decided as 1 significant bit cycle, it is possible to reduce the influence on the preceding and subsequent bit decision by windening this cycle to close to one significant bit cycle.

The most ideal way to widening the range is to process similar analog signals. For example, ideally, if 1 communication symbol cycle is 160 clocks, so the duration is returned to 0 in case of a signal of 79 clocks (less than 1/2 of 160) being detected, i.e. the bit value mentioned in the previous article is flipped to an adjacent bit; if a signal of 86 clocks is detected, it is extended by 37 clocks forward and backward to 160 clocks; if a signal of 100 clocks is detected, it is extended by 30 clocks forward and backward to 160 clocks. However, it is difficult for hardware to implement the processing. The current method is that for signals within a certain range, such as signals with a timing cnt of 80~ 88 clocks, they are fixed and extended to 120-cnt clocks forward and backward respectively; for signals with a timing cnt of 96~104 clocks,they are fixed and extended to 136-cnt clocks forward and backward respectively. The hardware overhead of this method is smaller, but the difference is not big from the final realization effect.

The parameters mentioned in the method for widening a narrow symbol signal according to the present invention are applicable in the range of ± 10%.

The invention shapes the waveform with less than 1-bit width and bad shape into the ideal symbol shape, and mainly embodies the function of how to use the symbol waveform in the subsequent way to widen the narrow signal, reduces the probability of error when generating the clock.

Although the present invention has been described in detail with reference to the aforementioned embodiments, those skilled in the art should understand that the technical solutions described in the aforementioned embodiments may be modified or some technical features may be equivalently replaced; these modifications or replacements do not deviate the essence of the corresponding technical solutions from the scope of the technical solutions of the present invention The invention is defined by the appended claims.

## Claims

1. A method for adjusting FSK-demodulated symbol width, the method performed by an apparatus and comprising:
sampling FSK-demodulated symbols;
timing a data duration of each sampling simultaneously;
determining in segments whether widening is required and a widening manner according to a current duration when a symbol hopping is found during sampling, and outputting a widening result after delay;
wherein timing a data duration of each sampling simultaneously comprising:
counting the duration of a high level and/or a low level of a symbol signal;
wherein the symbol hopping comprising:
the symbol signal transiting from a high level to a low level or from the low level to the high level in a short time;
wherein outputting a widening result after delay comprising:
outputting the widening result after latency of T(n), T(n) being the number of symbol cycles that is dynamically adjusted;
wherein determining in segments whether widening is required and a widening manner further comprising:
if a current level duration cnt does not exceed the latency of T(n), then determining sequentially whether the current level duration cnt exceeds B(n), B(n-1), B(n-2) ... B(0); if so, selecting a widening manner;
wherein B(n) is a maximum original level width line that requires to be widened; B(1), B(2), ... B(n-1) are n quantiles of B(0) to B(n);
wherein the high level corresponds to a symbol value 1 and the low level corresponds to a symbol value 0.

2. The method for adjusting FSK-demodulated symbol width of claim 1, **characterized in that**, determining in segments whether widening is required and a widening manner comprising:
determining whether a current level duration cnt exceeds the latency of T(n), and if so, continuing sampling to accumulate a next level duration, and proceeding to the determination of the next level.

3. The method for adjusting FSK-demodulated symbol width of claim 1, **characterized in that**, selecting the widening manner comprising:
clearing backward extension of a previous bit and backward extending a current bit by TM(n)-cnt if the previous bit has been widened, wherein TM(n) is a collision delay.

4. The method for adjusting FSK-demodulated symbol width n of claim 1, **characterized in that**,
selecting the widening manner comprising:
forward extending the current bit by T(n)-cnt and backward extending the current bit by T(n)-cnt if the previous bit is not widened.

5. An apparatus for adjusting FSK-demodulated symbol width, the apparatus
comprising: a sampling unit, a timer, and an extension unit;
the sampling unit is used for sampling the FSK-demodulated symbols;
the timer is used for timing a data duration of each sampling simultaneously;
the extension unit is used for determining in segments whether widening is required and a widening manner according to a current duration when a symbol hopping is found during sampling, and outputting a widening result after delay;
wherein the timer counts the duration of a high level and/or a low level of a symbol signal;
wherein the symbol hopping comprises:
the symbol signal transiting from a high level to a low level or from the low level to the high level in a short time;
wherein the extension unit outputs the widening result after latency of T(n), wherein T(n) is the number of symbol cycles that is dynamically adjusted;
wherein the extension unit determines sequentially whether a current level duration cnt exceeds B(n), B(n-1), B(n-2) ... B(0) if the current level duration cnt does not exceed the latency of T(n); if so, the extension unit selects a widening manner;
wherein B(n) is a maximum original level width line that requires to be widened; B(1), B(2), ... B(n-1) are n quantiles of B(0) to B(n);
wherein the high level corresponds to a symbol value 1 and the low level corresponds to a symbol value 0.

6. A computer program stored on a memory and comprising instructions which, when executed by a processor, cause the processor to execute the method for adjusting FSK-demodulated symbol width of any one of claims 1-4.

7. A computer-readable storage medium having a computer program stored which, when executed by a processor, causes the processor to execute the method for adjusting FSK-demodulated symbol width of any one of claims 1-4.

## Patentansprüche

1. Verfahren zur Einstellung einer FSK-demodulierten Symbolbreite, wobei das Verfahren durch eine Vorrichtung durchgeführt wird und umfasst:
Abtasten von FSK-demodulierten Symbolen;
gleichzeitiges Messen einer Datendauer jeder Abtastung;
Bestimmen in Segmenten, ob eine Aufweitung erforderlich ist, und einer Aufweitungsweise gemäß einer aktuellen Dauer, wenn ein Symbolhopping während des Abtastens gefunden wird, und Ausgeben eines Aufweitungsergebnisses nach Verzögerung;
wobei das gleichzeitige Messen einer Datendauer jeder Abtastung umfasst:
Zählen der Dauer eines hohen Pegels und/oder eines niedrigen Pegels eines Symbolsignals;
wobei das Symbolhopping umfasst:
dass das Symbolsignal in einer kurzen Zeit von einem hohen Pegel zu einem niedrigen Pegel oder von dem niedrigen Pegel zu dem hohen Pegel übergeht;
wobei das Ausgeben eines Aufweitungsergebnisses nach Verzögerung umfasst:
Ausgeben des Aufweitungsergebnisses nach einer Latenz von T(n), wobei T(n) die Anzahl von Symbolzyklen ist, die dynamisch angepasst wird;
wobei das Bestimmen in Segmenten, ob eine Aufweitung erforderlich ist, und einer Aufweitungsweise ferner umfasst:
falls eine aktuelle Pegeldauer cnt die Latenz von T(n) nicht überschreitet, dann sequentielles Bestimmen, ob die aktuelle Pegeldauer cnt B(n), B(n-1), B(n-2) ... B(0) überschreitet; wenn ja, Auswählen einer Aufweitungsweise;
wobei B(n) eine maximale ursprüngliche Pegelbreitenlinie ist, die aufgeweitet werden muss; B(1), B(2), ... B(n-1) n Quantile von B(0) bis B(n) sind;
wobei der hohe Pegel einem Symbolwert 1 entspricht und der niedrige Pegel einem Symbolwert 0 entspricht.

2. Verfahren zur Einstellung einer FSK-demodulierten Symbolbreite nach Anspruch 1, **dadurch gekennzeichnet, dass** das Bestimmen in Segmenten, ob eine Aufweitung erforderlich ist, und einer Aufweitungsweise umfasst: Bestimmen, ob eine aktuelle Pegeldauer cnt die Latenz von T(n) überschreitet, und wenn ja, Fortsetzen des Abtastens, um eine nächste Pegeldauer zu akkumulieren, und Fortfahren mit der Bestimmung des nächsten Pegels.

3. Verfahren zur Einstellung einer FSK-demodulierten Symbolbreite nach Anspruch 1, **dadurch gekennzeichnet, dass** das Auswählen der Aufweitungsweise umfasst:
Löschen einer rückwärtigen Verlängerung eines vorherigen Bits und rückwärtiges Verlängern eines aktuellen Bits um TM(n)-cnt, falls das vorherige Bit aufgeweitet worden ist, wobei TM(n) eine Kollisionsverzögerung ist.

4. Verfahren zur Einstellung einer FSK-demodulierten Symbolbreite n nach Anspruch 1, **dadurch gekennzeichnet, dass** das Auswählen der Aufweitungsweise umfasst:
vorwärtiges Verlängern des aktuellen Bits um T(n)-cnt und rückwärtiges Verlängern des aktuellen Bits um T(n)-cnt, falls das vorherige Bit nicht aufgeweitet ist.

5. Vorrichtung zur Einstellung einer FSK-demodulierten Symbolbreite, wobei die Vorrichtung umfasst: eine Abtasteinheit, einen Zeitgeber und eine Verlängerungseinheit;
die Abtasteinheit wird zum Abtasten der FSK-demodulierten Symbole verwendet;
der Zeitgeber wird zum gleichzeitigen Messen einer Datendauer jeder Abtastung verwendet;
die Verlängerungseinheit wird zum Bestimmen in Segmenten, ob eine Aufweitung erforderlich ist, und einer Aufweitungsweise gemäß einer aktuellen Dauer, wenn ein Symbolhopping während des Abtastens gefunden wird, und Ausgeben eines Aufweitungsergebnisses nach Verzögerung verwendet;
wobei der Zeitgeber die Dauer eines hohen Pegels und/oder eines niedrigen Pegels eines Symbolsignals zählt;
wobei das Symbolhopping umfasst:
dass das Symbolsignal in einer kurzen Zeit von einem hohen Pegel zu einem niedrigen Pegel oder von dem niedrigen Pegel zu dem hohen Pegel übergeht;
wobei die Verlängerungseinheit das Aufweitungsergebnis nach einer Latenz von T(n) ausgibt, wobei T(n) die Anzahl von Symbolzyklen ist, die dynamisch angepasst wird;
wobei die Verlängerungseinheit sequentiell bestimmt, ob eine aktuelle Pegeldauer cnt B(n), B(n-1), B(n-2) ... B(0) überschreitet, falls die aktuelle Pegeldauer cnt die Latenz von T(n) nicht überschreitet; wenn ja, wählt die Verlängerungseinheit eine Aufweitungsweise aus;
wobei B(n) eine maximale ursprüngliche Pegelbreitenlinie ist, die aufgeweitet werden muss; B(1), B(2), ... B(n-1) n Quantile von B(0) bis B(n) sind;
wobei der hohe Pegel einem Symbolwert 1 entspricht und der niedrige Pegel einem Symbolwert 0 entspricht.

6. Computerprogramm, das auf einem Speicher gespeichert ist und Anweisungen umfasst, die, wenn sie durch einen Prozessor ausgeführt werden, den Prozessor veranlassen, das Verfahren zur Einstellung einer FSK-demodulierten Symbolbreite nach einem der Ansprüche 1-4 auszuführen.

7. Computerlesbares Speichermedium mit einem gespeicherten Computerprogramm, das,
wenn es durch einen Prozessor ausgeführt wird, den Prozessor veranlasst, das Verfahren zur Einstellung einer FSK-demodulierten Symbolbreite nach einem der Ansprüche 1-4 auszuführen.

## Revendications

1. Procédé de réglage d'une largeur de symbole démodulé FSK, le procédé étant mis en œuvre par un appareil et comprenant :
l'échantillonnage de symboles démodulés FSK ;
le chronométrage simultané d'une durée de données de chaque échantillonnage ;
la détermination par segments si un élargissement est requis et un mode d'élargissement en fonction d'une durée actuelle lorsqu'un saut de symbole est trouvé pendant l'échantillonnage, et la production d'un résultat d'élargissement après un délai ;
dans lequel le chronométrage simultané d'une durée de données de chaque échantillonnage comprend :
le comptage de la durée d'un niveau haut et/ou d'un niveau bas d'un signal de symbole ;
dans lequel le saut de symbole comprend :
le signal de symbole passant d'un niveau haut à un niveau bas ou du niveau bas au niveau haut en un temps court ;
dans lequel la production d'un résultat d'élargissement après un délai comprend :
la production du résultat d'élargissement après une latence de T(n), T(n) étant le nombre de cycles de symbole qui est réglé dynamiquement ;
dans lequel le fait de déterminer par segments si un élargissement est requis et un mode d'élargissement comprend en outre :
si une durée de niveau actuel cnt ne dépasse pas la latence de T(n), alors le fait de déterminer successivement si la durée de niveau actuel cnt dépasse B(n), B(n-1), B(n-2) ... B(0) ; si tel est le cas, la sélection d'un mode d'élargissement ;
dans lequel B(n) est une ligne de largeur de niveau d'origine maximale qui nécessite un élargissement ; B(1), B(2), ... B(n-1) représentent n quantiles de B(0) à B(n) ;
dans lequel le niveau haut correspond à une valeur de symbole 1 et le niveau bas correspond à une valeur de symbole 0.

2. Procédé de réglage d'une largeur de symbole démodulé FSK selon la revendication 1, **caractérisé en ce que**, le fait de déterminer par segments si un élargissement est requis et un mode d'élargissement comprend : la détermination si une durée de niveau actuel cnt dépasse la latence de T(n), et si tel est le cas, la poursuite de l'échantillonnage pour accumuler une durée de niveau suivant, le passage à la détermination du niveau suivant.

3. Procédé de réglage d'une largeur de symbole démodulé FSK selon la revendication 1, **caractérisé en ce que** la sélection du mode d'élargissement comprend :
l'effacement de l'extension vers l'arrière d'un bit précédent et de l'extension vers l'arrière d'un bit actuel par TM(n)-cnt si le bit précédent a été élargi, dans lequel TM(n) est un délai de collision.

4. Procédé de réglage d'une largeur n de symbole démodulé FSK selon la revendication 1, **caractérisé en ce que**,
la sélection du mode d'élargissement comprend :
l'extension vers l'avant du bit actuel par T(n)-cnt et l'extension vers l'arrière du bit actuel de T(n)-cnt si le bit précédent n'est pas élargi.

5. Appareil de réglage d'une largeur de symbole démodulé FSK, l'appareil comprenant : une unité d'échantillonnage, un temporisateur et une unité d'extension ;
l'unité d'échantillonnage est utilisée pour échantillonner les symboles démodulés FSK ;
le temporisateur est utilisé le chronométrage simultanéune d'une durée de données de chaque échantillonnage ;
l'unité d'extension est utilisée pour déterminer par segments si un élargissement est requis et un mode d'élargissement en fonction d'une durée actuelle lorsqu'un saut de symbole est trouvé pendant l'échantillonnage, et la production d'un résultat d'élargissement après un délai ;
dans lequel le temporisateur compte la durée d'un niveau haut et/ou d'un niveau bas d'un signal de symbole ;
dans lequel le saut de symbole comprend :
le signal de symbole passant d'un niveau haut à un niveau bas ou du niveau bas au niveau haut en un temps court ;
dans lequel l'unité d'extension produit le résultat d'élargissement après une latence de T(n), dans lequel T(n) est le nombre de cycles de symbole qui est réglé dynamiquement ;
dans lequel l'unité d'extension détermine successivement si une durée de niveau actuel cnt dépasse B(n), B(n-1), B(n-2) ... B(0) si la durée de niveau actuel cnt ne dépasse pas la latence de T(n) ; si tel est le cas, l'unité d'extension sélectionne un mode d'élargissement ;
dans lequel B(n) est une ligne de largeur de niveau d'origine maximale nécessitant un élargissement ; B(1), B(2), ... B(n-1) représente n quantiles de B(0) à B(n) ;
dans lequel le niveau haut correspond à une valeur de symbole 1 et le niveau bas correspond à une valeur de symbole 0.

6. Programme informatique stocké sur une mémoire et comprenant des instructions qui, lorsqu'elles sont exécutées par un processeur, amènent le processeur à exécuter le procédé de réglage d'une largeur de symbole démodulé FSK de l'une quelconque des revendications 1 à 4.

7. Support de stockage lisible par ordinateur ayant un programme informatique stocké qui,
lorsqu'il est exécuté par un processeur, amène le processeur à exécuter le procédé de réglage d'une largeur de symbole démodulé FSK de l'une quelconque des revendications 1 à 4.
